# EUROPÄISCHE PATENTSCHRIFT

(11) **EP 1 055 536 B1**
(45) Veröffentlichungstag und Bekanntmachung des Hinweises auf die Patenterteilung: **17.07.2002**
(21) Anmeldenummer: 99109797.3
(22) Anmeldetag: 18.05.1999
(51) Int. Cl.: B60H 1/34

(54) **Lamellensystem**
System with vanes
Système avec lamelles

(43) Veröffentlichungstag der Anmeldung: 29.11.2000
(73) Patentinhaber: TRW Automotive Electronics & Components GmbH & Co. KG, 78315 Radolfzell (DE)
(72) Erfinder: Krause, Reinhard, 95615 Marktredwitz-Brand (DE)
(74) Vertreter: Schieschke, Klaus, Dipl.-Ing.

(56) Entgegenhaltungen:
- EP-A- 0 888 916
- EP-A- 0 899 136
- DE-U- 29 819 759
- US-A- 5 338 252
- PATENT ABSTRACTS OF JAPAN vol. 018, no. 297 (M-1617), 7. Juni 1994 (1994-06-07) & JP 06 058616 A (NIPPON PLAST CO LTD), 4. März 1994 (1994-03-04)

## Beschreibung

Die Erfindung bezieht sich auf ein Lamellensystem für eine Belüftungseinrichtung zur Regelung eines Luftstromes, insbesondere zur Belüftung eines Kraftfahrzeuges, mit mehreren, bewegungsgekoppelten Lamellen, welche über ein Stellelement zum Öffnen und Schließen eines Luftkanals bewegbar sind, wobei die Lamellen mit dem Stellelement über mindestens einen Zapfen in Wirkverbindung stehen, welcher in einer durch Betätigung des Stellelements bewegbaren Führungsnut eingelagert ist, nach dem Oberbegriff des Ausprüchs 1.

Die vorgenannten Lamellensysteme finden bevorzugt in Kraftfahrzeugen Anwendung, wobei es möglich ist, individuell die Belüftung des Fahrzeuginnenraums durch Öffnen und Schließen der Lamellen zu regulieren. Entsprechend sind diese Lamellen zwischen einer ersten geschlossenen Endstellung und einer zweiten offenen Endstellung bewegbar.

Als allgemeiner Stand der Technik ist es bereits bekannt, bei einem derartigen Lamellensystem im Bereich des Stellelements ein Planetenradgetriebe anzuordnen, welches mit einer Scheibe zusammenwirkt.

Diese bekannte Konstruktion ist infolge des Einsatzes des Planetenradgetriebes bauaufwendig, wobei außerdem der Nachteil besteht, dass zum vollständigen Verschwenken der Lamellen zwischen den beiden Endstellungen die Betätigungsfläche des Stellelements mehrfach manuell gedreht werden muss. Damit ist auch die Bedienung dieses bekannten Systems aufwendig.

Als Stand der Technik, ist weiterhin ein Lamellensystem bekannt (EP-A-0 888 916), bei welchem der mit den bewegungsgekoppelten Lamellen verbundene Zapfen in eine Führungsnut greift, die an einem Schwenkhebel ausgebildet ist. Dieser Schwenkhebel seinerseits ist mittels des Stellelements bewegbar.

Bei der vorgenannten bekannten Konstruktion ist die Führungsnut, in welcher der Zapfen der Lamellen bewegbar ist, in etwa V-förmig ausgebildet, so dass weitere Vorkehrungen getroffen werden müssen, um aus einer indifferenten Totpunktlage den Zapfen funktionsrichtig zu bewegen, d. h. die Lamellen in der richtigen Weise zwischen den beiden Endstellungen zu verschwenken.

Ein weiterer Nachteil liegt darin, dass bei der bekannten Konstruktion nicht oder nur sehr aufwendig die Möglichkeit besteht, das die Bewegung der Lamellen auslösende Stellelement z. B. auch bei Nachtfahrten optisch gut sichtbar zu machen.

Nächstkommender Stand der Technik ist ein system gemäß DE-U-29819759, welches die gleichen vorgenannte Nachteile aufweist.

Demgegenüber liegt der vorliegenden Erfindung die Aufgabe zugrunde, die Konstruktion des vorstehend genannten Lamellensystems so zu verbessern, dass auf einfache Weise die Möglichkeit geschaffen wird, das Stellelement optisch gut sichtbar zu machen.

Diese Aufgabe wird erfindungsgemäß mit den Merkmalen im kenn zeichnenden Teil des Auspruch 1 gelöst.

Durch diese Konstruktion ergibt sich der Vorteil durch das Gehäuse eine Einbaumöglichkeit für mindestens eine Lichtquelle zu schaffen.

Nach einem anderen Merkmal der Erfindung können die Außenbereiche der Stirnfläche des Stellelements gegen die Lichtquelle abgedeckt sein, wobei der mittlere Bereich transparent ausgebildet ist.

Die erfindungsgemäße Konstruktion erfährt insofern eine weitere Vereinfachung, als die den Lamellen benachbarte Seitenwand des Stellelements die Führungsnut aufweisen kann. Hierbei besteht in vorteilhafter Weiterbildung die Möglichkeit, dass diese Seitenwand mit einer zweiten Führungsnut in Form einer stetig gewölbten Kurve versehen ist, in welche ein zweiter Zapfen der Lamellen eingreift. Durch das Zusammenwirken von zwei jeweils einen stetig gewölbten Kurvenverlauf aufweisenden Führungsnuten und den darin gelagerten Zapfen, welche die Lamellen betätigen, ergibt sich auf einfache Weise ein sehr effektiver und störungsfreier Bewegungsablauf für die Lamellen.

Die beiden vorgenannten Führungsnuten können im Winkel zueinander angeordnet sein. Bei einer Konstruktion, bei welcher das Stellelement als zumindest teilweise um eine Achse drehbares Betätigungsrad ausgebildet ist, besteht hierbei in weiterer Ausgestaltung der Erfindung die Möglichkeit, dass die beiden Führungsnuten beidseitig der vorgenannten Achse angeordnet sind. Hierbei kann die eine Führungsnut zu der Achse hin gewölbt sein, wobei die zweite Führungsnut zumindest teilweise um die Achse herum gewölbt ist.

Um für eine Bedienperson bei Betätigung des Stellelements erkennbar zu machen, dass sich dieses einem Endbereich der Bewegung des Stellelements nähert, besteht in weiterer Ausgestaltung der Erfindung die Möglichkeit, dass eine bewegungshemmende Zwischenrast vorgesehen ist. Diese Zwischenrast kann beispielsweise als Verengung in zumindest einem Endbereich der zweiten Führungsnut ausgebildet sein.

Die Erfindung wird nachfolgend anhand eines in der Zeichnung dargestellten Ausführungsbeispiels näher beschrieben. In der Zeichnung zeigen:
- Fig. 1: eine perspektivische Ansicht des Lamellensystems mit speziell gestaltetem Stellelement, teils gebrochen;
- Fig. 2: eine Seitenansicht des Lamellensystems in schematischer Darstellung mit geschlossenen Lamellen;
- Fig. 3: die Ansicht nach Fig. 2 mit halb geöffneten Lamellen;
- Fig.4: die Ansicht nach Fig. 2 mit geöffneten Lamellen.

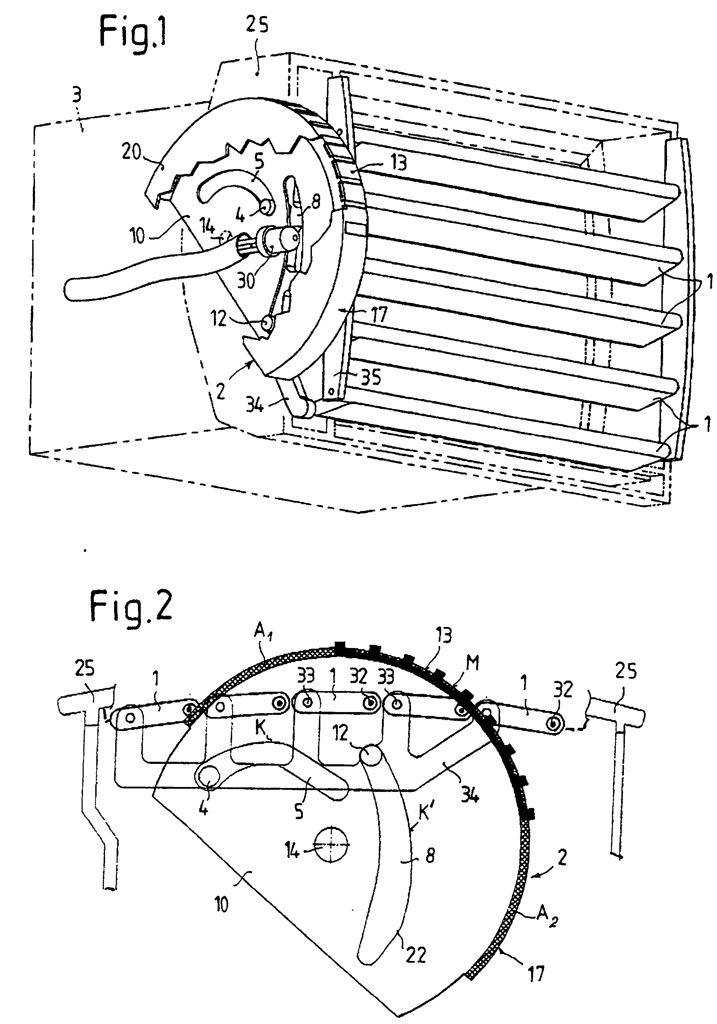

In den Figuren 1 bis 4 ist ein Lamellensystem für eine Belüftungseinrichtung zur Regelung eines Luftstromes, insbesondere zur Belüftung eines Kraftfahrzeuges dargestellt. Dieses Lamellensystem wird von einem Gehäuse 25 umfasst, welches einen Luftkanal 3 definiert. Vorzugsweise ist das Gehäuse 25 mit dem Lamellensystem im Bereich des Armaturenbrettes eines Kraftfahrzeuges angeordnet.

In dem Gehäuse 25 befinden sich mehrere, bewegungsgekoppelte Lamellen 1, welche über ein Stellelement 2 zum Öffnen und Schließen des Luftkanals 3 bewegbar sind.

Die Lamellen 1 sind gemäß den Figuren 1, 3 und 4 in einem gemeinsamen Lagergestell 35 gelagert und zwar jeweils über Gelenke, die Drehpunkte 32 bilden. Im anderen Endbereich jeder Lamelle 1 befindet sich ein Gelenk 33, wobei alle Gelenke 33 mit einem gemeinsamen Stellhebel 34 verbunden sind.

Der Stellhebel 34 weist in einem Endbereich zwei Zapfen 4 und 12 auf. Diese Zapfen 4 und 12 greifen in Führungsnuten 5 und 8, welche nach den Fig. 2 bis 4 jeweils als stetig gewölbte Kurven K bzw. K' ausgebildet sind.

Insbesondere Fig. 1 ist zu entnehmen, dass sich auf der einen Seite des Gehäuses 25 das Stellelement 2 befindet, welches als Kunststoffgehäuse ausgebildet ist. Bei dem dargestellten Ausführungsbeispiel weist dieses Stellelement 2 zwei im Abstand voneinander angeordnete, parallel verlaufende Seitenwände 10 und 20 auf, welche eine Stirnfläche 13 begrenzen, die z. B. mit einer Rändelung versehen ist.

Bei dem vorstehenden Ausführungsbeispiel ist das Stellelement 2 als zumindest teilweise um eine Achse 14 drehbares Betätigungsrad 17 ausgebildet. Die den Lamellen 1 benachbarte Seitenwand 10 des Stellelements 2 weist die beiden Führungsnuten 5 und 8 auf, in welche die Zapfen 4 und 12 eingreifen, die Teil des Stellhebels 34 sind.

Die beiden Führungsnuten 5 und 8 befinden sich beidseitig der Achse 14, wobei aus den Fig. 2 bis 4 hervorgeht, dass die eine Führungsnut 5 zu der Achse 14 hin gewölbt ist, wohingegen die zweite Führungsnut 8 zumindest teilweise um die Achse 14 herum gewölbt ist.

Durch die beiden Seitenwände 10 und 20 und durch die die beiden Seitenwände begrenzende Stirnfläche 13 wird ein einseitig offenes Gehäuse geschaffen, welches gemäß Fig. 1 zur Aufnahme einer Lichtquelle 30 geeignet ist. Hierbei besteht die Möglichkeit, dass nach den Fig. 2 bis 4 die Außenbereiche A₁ und A₂ der Stirnfläche 13 gegen die Lichtquelle 30 abgedeckt sind, wohingegen der mittlere Bereich M transparent ausgebildet sein kann. Damit ist eine Beleuchtung des Stellelements 2 des Lamellensystems möglich.

Das speziell gestaltete Stellelement 2 weist damit eine Doppelfunktion auf, Initiierung der Bewegung der Lamellen 1 über die Zapfen 4 und 12 und die Führungsnuten 5 und 8 und Unterbringung einer Lichtquelle 30, beispielsweise eines Lichtleiters zur Beleuchtung des Stellelements bei Nachtfahrten.

In Fig. 2 befinden sich die Lamellen 1 in Schließstellung: Hier lagern die Zapfen 4 und 12 des Stellhebels 34 jeweils im linken Endbereich der Führungsnuten 5 und 8.

Wird nun das Stellelement 2 im Gegenuhrzeigersinn um die Achse 14 gedreht, so bewegen sich die Zapfen 4 und 12 innerhalb der jeweils stetig gewölbten Führungskurve 5 bzw. 8, wodurch die Lamellen 1 um ihre Drehpunkte 32 schwenken, die sich in dem schematisch dargestellten Lagergestell 35 befinden. Hierdurch gelangen die Lamellen 1 in eine in etwa halboffene Stellung.

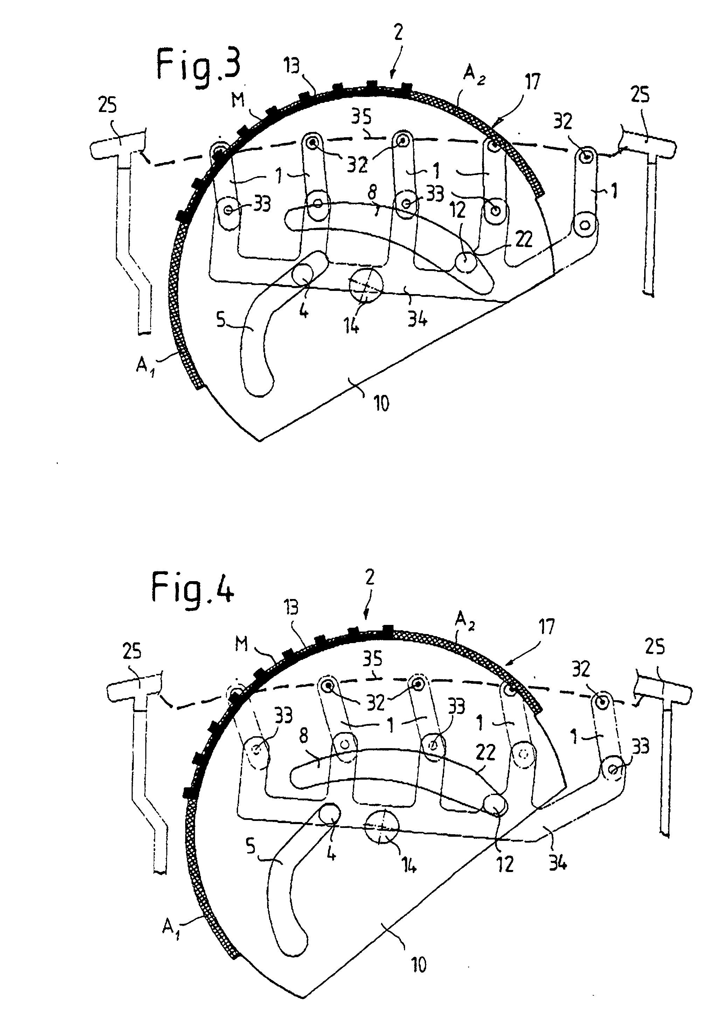

Wird nun nach Fig. 4 das Stellelement 2 weitergedreht, so gelangen die Zapfen 4 und 12 in den anderen Endbereich der Kurven 5 bzw. 8 und die Lamellen 1 bewegen sich in die Offenstellung.

Erfindungsgemäß besteht die Möglichkeit, dass zumindest in einem Endbereich der Bewegung des Stellelements 2 eine bewegungshemmende Zwischenrast vorgesehen ist. Bei der vorliegenden Ausführungsform kann die Zwischenrast als Verengung 22 zumindest in einem Endbereich der zweiten Führungsnut 8 vorgesehen sein, wodurch bei manueller Betätigung des Stellelements 2 die Bedienperson feststellt, dass nunmehr die andere Endstellung, d. h. die Offenstellung der Lamellen 1 erreicht wird.

Durch die vorgenannte Doppelfunktion des Stellelements 2, welches beispielsweise als um eine Achse 14 drehbares Betätigungsrad 17 ausgebildet ist, ergibt sich die Möglichkeit einer Vereinfachung des Bewegungsablaufs für die Lamellen 1, wobei gleichzeitig eine Möglichkeit geschaffen wird, das Stellelement 2 von innen zu beleuchten, so dass hieraus eine Erhöhung des Fahrkomforts resultiert.

## Patentansprüche

1. Lamellensystem für eine Belüftungseinrichtung zur Regelung eines Luftstromes, insbesondere zur Belüftung eines Kraftfahrzeuges, mit mehreren bewegungsgekoppelten Lamellen (1), welche über ein Stellelement (2) zum Öffnen und Schließen eines Luftkanals (3) bewegbar sind,
wobei die Lamellen (1) mit dem Stellelement (2) über mindestens einen Zapfen (4) in Wirkverbindung stehen, welcher in einer durch Betätigung des Stellelements (2) bewegbaren Führungsnut (5) gelagert ist,
wobei das Stellelement (2) als Kunststoffgehäuse mit mindestens einer Seitenwand (10) und einer Stirnfläche (13) ausgebildet ist und
die einen stetig gewölbten Kurvenverlauf (K) aufweisende Führungsnut (5) in der Seitenwand (10) angeordnet ist,
**dadurch gekennzeichnet, dass** das Stellelement (2) zwei im Abstand voneinander angeordnete Seitenwände (10, 20) aufweist, welche die Stirnfläche (13) begrenzen,
**dass** die Stirnfläche (13) zumindest teilweise transparent ist und
**dass** in dem das Stellelement (2) bildenden Gehäuse mindestens eine Lichtquelle (30) angeordnet ist.

2. System nach Anspruch 1, **dadurch gekennzeichnet, dass** die Außenbereiche (A₁, A₂) der Stirnfläche (13) gegen die Lichtquelle (30) abgedeckt sind und dass der mittlere Bereich (M) transparent ausgebildet ist.

3. System nach einem oder mehreren der vorhergehenden Ansprüche, **dadurch gekennzeichnet, dass** die den Lamellen (1) benachbarte Seitenwand (10) des Stellelements (2) die Führungsnut (5) aufweist.

4. System nach einem oder mehreren der vorhergehenden Ansprüche, **dadurch gekennzeichnet, dass** die Seitenwand (10) mit einer zweiten Führungsnut (8) in Form einer stetig gewölbten Kurve (K') versehen ist, in welcher ein zweiten Zapfen (12) der Lamellen (1) eingreift.

5. System nach Anspruch 4, **dadurch gekennzeichnet, dass** die beiden Führungsnuten (5; 8) im Winkel zueinander angeordnet sind.

6. System nach einem oder mehreren der vorhergehenden Ansprüche, wobei das Stellelement (2) als zumindest teilweise um eine Achse (14) drehbares Betätigungsrad (17) ausgebildet ist, **dadurch gekennzeichnet, dass** die beiden Führungsnuten (5; 8) beidseitig der Achse (14) angeordnet sind.

7. System nach Anspruch 6, **dadurch gekennzeichnet, dass** die eine Führungsnut (5) zu der Achse (14) hingewölbt ist und dass die zweite Führungsnut (8) zumindest teilweise um die Achse (14) herum gewölbt ist.

8. System nach einem oder mehreren der vorhergehenden Ansprüche, **dadurch gekennzeichnet, dass** zumindest in einem Endbereich der Bewegung des Stellelements (2) eine bewegungshemmende Zwischenrast vorgesehen ist.

9. System nach Anspruch 8, **dadurch gekennzeichnet, dass** die Zwischenrast als Verengung (22) in zumindest einem Endbereich der zweiten Führungsnut (8) ausgebildet ist.

## Claims

1. System of vanes for a ventilating device for regulating an air flow, in particular for ventilating a motor vehicle, having a plurality of movement-connected vanes (1) which can be moved via an adjusting element (2) for the purpose of opening and closing an air duct (3),
the vanes (1) being operatively connected to the adjusting element (2) via at least one pin (4) which is mounted in a guide groove (5) movable by actuation of the adjusting element (2),
the adjusting element (2) being designed as a plastic housing having at least one side wall (10) and an end surface (13), and
the guide groove (5), which has a curve profile (K) having a continuous groove, being arranged in the side wall (10),
**characterized in that** the adjusting element (2) has two side walls (10, 20) which are arranged at a distance from each other and bound the end surface (13),
**in that** the end surface (13) is at least partially transparent, and
**in that** at least one light source (30) is arranged in the housing forming the adjusting element (2).

2. System according to Claim 1, **characterized in that** the outer regions (A₁, A₂) of the end surface (13) are covered with respect to the light source (30) and **in that** the central region (M) is of transparent design.

3. System according to one or more of the preceding claims, **characterized in that** that side wall (10) of the adjusting element (2) which is adjacent to the vanes (1) has the guide groove (5).

4. System according to one or more of the preceding claims, **characterized in that** the side wall (10) is provided with a second guide groove (8) in the form of a curve (K') which is continuously curved and in which a second pin (12) of the vanes (1) engages.

5. System according to Claim 4, **characterized in that** the two guide grooves (5; 8) are arranged at an angle to each other.

6. System according to one or more of the preceding claims, the adjusting element (2) being designed as an actuating wheel (17) which can be rotated at least partially about the axis (14), **characterized in that** the two guide grooves (5; 8) are arranged on both sides of the axis (14).

7. System according to Claim 6, **characterized in that** the one guide groove (5) is curved towards the axis (14) and **in that** the second guide groove (8) is curved at least partially around the axis (14).

8. System according to one or more of the preceding claims, **characterized in that** a movement-inhibiting intermediate latch is provided at least in one end region of the movement of the adjusting element (2).

9. System according to Claim 8, **characterized in that** the intermediate latch is designed as a constriction (22) in at least one end region of the second guide groove (8).

## Revendications

1. Système à lamelles pour un dispositif d'aération pour réguler un écoulement d'air, en particulier pour aérer un véhicule automobile, comportant plusieurs lamelles (1) à mouvements couplés, qui sont mobiles via un élément de positionnement (2) pour ouvrir et fermer un canal à air (3), dans lequel
les lamelles (1) sont en liaison d'action avec l'élément de positionnement (2) via au moins un tenon (4) qui est monté dans une gorge de guidage (5) mobile par actionnement de l'élément de positionnement (2),
l'élément de positionnement (2) est réalisé sous forme de boîtier en matière plastique comportant au moins une paroi latérale (10) et une surface frontale (13), et
la gorge de guidage (5) présentant un tracé en courbe (K) à courbure constante est ménagée dans la paroi latérale (10),
**caractérisé en ce que** l'élément de positionnement (2) comprend deux parois latérales (10, 20) agencées à distance l'une de l'autre qui délimitent la surface frontale (13),
**en ce que** la surface frontale (13) est du moins partiellement transparente, et
**en ce qu'**au moins une source de lumière (30) est agencée dans le boîtier formant l'élément de positionnement (2).

2. Système selon la revendication 1, **caractérisé en ce que** les zones extérieures (A₁, A₂) de la surface frontale (13) sont recouvertes vis-à-vis de la source de lumière (30), et **en ce que** la zone médiane (M) est réalisée transparente.

3. Système selon l'une ou l'autre des revendications précédentes, **caractérisé en ce que** la paroi latérale (10) de l'élément de positionnement (2) voisine des lamelles (1) comprend la gorge de guidage (5).

4. Système selon l'une ou plusieurs des revendications précédentes, **caractérisé en ce que** la paroi latérale (10) est pourvue d'une deuxième gorge de guidage (8) sous forme de courbe (K') à courbure constante dans laquelle s'engage un deuxième tenon (12) des lamelles (1).

5. Système selon la revendication 4, **caractérisé en ce que** les deux gorges de guidage (5 ; 8) sont agencées sous un angle l'une par rapport à l'autre.

6. Système selon l'une ou plusieurs des revendications précédentes, dans lequel l'élément de positionnement (2) est réalisé sous la forme d'une roue d'actionnement (17) tournant au moins partiellement autour d'un axe (14), **caractérisé en ce que** les deux gorges de guidage (5 ; 8) sont agencées des deux côtés de l'axe (14).

7. Système selon la revendication 6, **caractérisé en ce que** l'une des gorges de guidage (5) est incurvée vers l'axe (14), et **en ce que** la deuxième gorge de guidage (8) est incurvée du moins partiellement autour de l'axe (14).

8. Système selon l'une ou plusieurs des revendications précédentes, **caractérisé en ce qu'**il est prévu un cran intermédiaire ralentissant le mouvement au moins dans une zone de fin de course de l'élément de positionnement (2).

9. Système selon la revendication 8, **caractérisé en ce que** le cran intermédiaire est réalisé sous forme de rétrécissement (22) dans au moins une zone finale de la deuxième gorge de guidage (8).
